# EUROPÄISCHE PATENTSCHRIFT

(11) **EP 2 877 342 B1**
(45) Veröffentlichungstag und Bekanntmachung des Hinweises auf die Patenterteilung: **21.12.2016**
(21) Anmeldenummer: 13730588.4
(22) Anmeldetag: 24.06.2013
(51) Int. Cl.: B29K 627/06, B29K 23/00, B29K 33/00, B32B 27/06, B29K 75/00, B29K 79/00, B29C 43/52, B29K 105/04, B32B 5/18, B29C 44/56, C08J 9/36, B29C 35/08, B29C 51/06, B29C 51/14, B29C 51/42, B29K 105/24, B29K 105/12

(54) **NEUER FORMGEBUNGSPROZESS FÜR PMI-SCHAUMWERKSTOFFE BZW. DARAUS HERGESTELLTE COMPOSITEBAUTEILE**
NOVEL SHAPING PROCESS FOR PMI FOAM MATERIALS AND/OR COMPOSITE COMPONENTS PRODUCED THEREFROM
NOUVEAU PROCÉDÉ DE FORMAGE DE MATÉRIAUX EXPANSÉS À BASE DE PMI OU PIÈCES COMPOSITES FABRIQUÉES À PARTIR DE CES MATÉRIAUX

(30) Priorität: 24.07.2012 US 201261675011 P
(43) Veröffentlichungstag der Anmeldung: 03.06.2015
(73) Patentinhaber: Evonik Röhm GmbH, 64293 Darmstadt (DE)
(72) Erfinder: PINTO, Jorge, 64285 Darmstadt (DE); ROTH, Matthias Alexander, Mobile, Alabama 36693 (US); SÜNDERMANN, Jörn Daniel, 64287 Darmstadt (DE); KRAATZ, Arnim, 64287 Darmstadt (DE); SCHLAGER, Dieter, 91481 Altershausen (DE); ZIMMERMANN, Rainer, deceased (DE)
(86) Internationale Anmeldenummer: PCT/EP2013/063137
(87) Internationale Veröffentlichungsnummer: WO 2014/016068

(56) Entgegenhaltungen:
- EP-A2- 0 488 762
- US-A- 5 976 288
- US-A1- 2009 284 048

## Beschreibung

### Gebiet der Erfindung

Die vorliegende Erfindung betrifft ein neuartiges Verfahren, welches z.B. zur Herstellung von Compositematerialien mit Kernen aus Hartschaumstoffen geeignet ist. Dabei ist der große Vorteil der Erfindung, dass sowohl der Schaumwerkstoff als auch die Deckschicht frei wählbar sind. Insbesondere sind mit dem vorliegenden Verfahren auch Deckschichten verarbeitbar, deren Verarbeitungstemperatur deutlich von denen des Kernwerkstoffs abweicht.

Weiterhin betrifft die vorliegende Erfindung ein Verfahren, mit dem in einer zweiten Ausführungsform integrale Schaumstrukturen partiell verdichtet werden können. Mit einer dritten Ausführungsform ist es möglich, aus mindestens zwei Werkstücken eines Schaumstoffs durch Verschweißen einen Hohlkörper mit besonders hochwertigen Fügestellen herzustellen. Dabei kann dies mit oder ohne Deckschichten erfolgen.

Darüber hinaus ist es mit dem vorliegenden Verfahren besonders gut möglich, Schaumwerkstoffe mittels eines Vakuumformprozesses zu verarbeiten.

### Stand der Technik

Im Stand der Technik sind diverse Verfahren zur Herstellung von faserverstärkten Kunststoffen mit einem Hartschaumstoff oder zur Formgebung von harten Schaumwerkstoffen im Allgemeinen beschrieben. Unter Hartschaumstoffen werden im Zusammenhang dieser Erfindung Schaumstoffe verstanden, die sich nicht - wie zum Beispiel handelsübliche PU- oder Polystyrolschaumstoffe - mit geringen Kräften mechanisch verformen lassen und sich anschließend wieder zurückstellen. Beispiel für Hartschaumstoffe sind vor allem PP-, PMMA- oder hochvernetzte PU-Schäume. Ein besonders stark belastbarer harter Schaumwerkstoff ist Poly(meth)acrylimid (PMI), wie er zum Beispiel von der Firma Evonik unter dem Namen ROHACELL^{®} vertrieben wird.

Ein allgemein bekanntes Verfahren zur Herstellung beschriebener Compositematerialien ist die Formgebung der Deckschichten mit anschließender Füllung des Schaumrohmaterials und dessen abschließender Schäumung. Ein solches Verfahren ist beispielsweise in US 4,933,131 beschrieben. Ein Nachteil dieses Verfahrens ist, dass die Schäumung zumeist sehr ungleichmäßig erfolgt. Dies gilt insbesondere für Materialien wie PMI, die bestenfalls als Granulat zugegeben werden können. Ein weiterer Nachteil eines solchen Verfahrens ist, dass zur Formgebung eines reinen Schaumwerkstoffs, die Deckschichten wieder entfernt werden müssten. Im Falle von Compositebauteilen wiederum ist die Haftung zwischen Deckschichten und dem Schaumkern oft nicht ausreichend für mechanisch belastete Bauteile.

In Passaro et al., Polymer Composites, 25(3), 2004, S.307ff ist ein Verfahren beschrieben bei dem ein PP-Schaumkernstoff mit einem faserverstärkten Kunststoff in einem Presswerkzeug zusammengefügt wird und dabei der Schaumkernstoff mittels des Werkzeugs gezielt nur an der Oberfläche erhitzt wird, um eine gute Bindung zum Deckmaterial zu ermöglichen. In Grefenstein et al., International SAMPE Symposium and Exhibition, 35 (1, Adv.Materials: Challenge Next Decade), 1990, S.234-44 ist ein analoges Verfahren zur Herstellung von Sandwich-Materialien mit einem Wabenkernmaterial oder einem PMI-Schaumkern beschrieben. Eine Formgebung ist mit diesen beiden Verfahren jedoch nicht möglich, sondern nur die Herstellung von Sandwichmaterialien in Plattenform.

In WO 02/098637 ist ein Verfahren beschrieben, bei dem ein thermoplastisches Deckmaterial als Schmelze auf die Oberfläche eines Schaumkernmaterials gebracht wird, dann zusammen mit dem Schaumkern zu einem Compositeformteil mittels einem Twin-Sheet-Verfahren geformt wird und anschließend der Thermoplast derart abgekühlt wird, dass das Deckmaterial in der Form erstarrt. Mit diesem Verfahren lassen sich jedoch nur eine begrenzte Zahl von Materialien kombinieren. So können zum Beispiel keine Faserverstärkten Deckmaterialien hergestellt werden. Auch ist das Verfahren zur reinen Formgebung eines Schaumwerkstücks ohne Deckmaterialien nicht anwendbar. Weiterhin ist auch die Auswahl der Schaumwerkstoffe auf bei niedrigen Temperaturen elastisch verformbare Materialien beschränkt. Ein Hartschaum würde bei einem solchen Verfahren ohne gleichmäßiges Aufheizen des Schaumaterials strukturell zu sehr beschädigt.

Sehr ähnlich ist das in EP 0 272 359 beschriebene Verfahren. Hier wird in Schaumkernrohling erst in Form geschnitten und in ein Werkzeug gelegt. Anschließend wird die Schmelze des thermoplastischen Materials auf die Oberfläche injiziert. Durch eine Temperaturerhöhung wird darauf der Schaumkernrohling aufgeschäumt, wodurch es zu einem Pressen auf die Oberfläche des Deckmaterials kommt. Zwar kann mit diesem Verfahren eine bessere Haftung zu dem Deckmaterial erreicht werden. Dafür ist das Verfahren mit dem zusätzlichen Arbeitsschritt der ersten Formgebung aufwendiger und insgesamt bezüglich der realisierbaren Formen deutlich stärker beschränkt.

In W. Pip, Kunststoffe, 78(3), 1988, S.201-5 ist ein Verfahren zur Herstellung von geformten Compositen mit faserverstärkten Deckschichten und einem PMI-Schaumkern in einem Presswerkzeug beschrieben. Bei diesem Verfahren wird erfolgt das Zusammenführen der einzelnen Schichten in einem beheizten Presswerkzeug, wobei eine leichte Formgebung durch ein Zusammendrücken der obersten Schichten im lokal erhitzten Schaumwerkstoff erfolgt. Gleichzeitig ist ein Verfahren beschrieben, bei dem durch ein Nachschäumen innerhalb des Werkzeugs eine Form gebildet werden kann. Die Nachteile eines solchen Verfahrens wurden bereits zuvor diskutiert. Als dritte Variante ist ein Verfahren offenbart, bei dem eine elastische Stauchung des Materials während des Pressens eines vorgeheizten Schaummaterials erfolgt. Das Vorheizen erfolgt in einem Ofen. Nachteil dieses Verfahrens ist jedoch, dass für viele Schaumwerkstoffe sehr hohe Temperaturen zur thermoelastischen Verformung benötigt werden. So werden zum Beispiel für PMI-Schäume Temperaturen von mindestens 185 °C benötigt. Weiterhin muss der Kernwerkstoff über den gesamten Materialbereich entsprechend aufgeheizt sein, um Materialbrüche zu vermeiden. Bei solchen Temperaturen, zumal diese in der gleichmäßigen Verteilung nur mit einem längeren Aufheizen von mehreren Minuten möglich sind, würden jedoch viele Deckmaterialien, wie z.B. PP, derart beschädigt, dass der Prozess nicht durchführbar ist.

In U. Breuer, Polymer Composites, 1998, 19(3), S. 275-9 ist ein leicht modifiziertes Verfahren der zuvor diskutierten dritten Variante aus Pip für PMI-Schaumkerne offenbart. Hier erfolgt das Aufheizen des PMI-Schaumkerns und der faserverstärkten Deckmaterialien mittels einer IR-Wärmelampe. Solche IR-Wärmestrahler, die vor allem Licht mit Wellenlängen im Bereich zwischen 3 und 50 µm (IR-C-, bzw. MIR-Strahlung) abstrahlen, sind besonders gut geeignet für ein schnelles Aufheizen des Substrats. Jedoch ist dabei der Energieeintrag - gewünscht - sehr hoch, was gleichzeitig zur Schädigung vieler Deckmaterialien, wie zum Peispiel PP, führt. So ist in Breuer et al. auch nur Polyamid 12 (PA12) als mögliches Matrixmaterial für die Deckschichten offenbart. PA 12 kann leicht auf über 200 °C erhitzt werden, ohne dass es zu einer Schädigung des Kunststoffes kommt. Eine gleichzeitige Formgebung des Schaumkerns ist in dieser Verfahrensweise nicht möglich, da die Wärmestrahlung des IR-Strahlungsbereiches nicht in die Schaummatrix eindringt und somit kein thermoplastisch formbarer Zustand erreicht wird.

### Aufgabe

Vor dem Hintergrund des diskutierten Standes der Technik war es daher Aufgabe der vorliegenden Erfindung, ein neues Verfahren zur Verfügung zu stellen, mittels dem harte Schaumwerkstoffe schnell und einfach ohne strukturelle Schädigung verformt und/oder mit Deckschichten, insbesondere mit thermoplastischen Kunststoffen, zu Compositen verarbeitet werden können.

Insbesondere war es Aufgabe der vorliegenden Erfindung, ein Verfahren zur Verfügung zu stellen, bei dem diese Compositematerialien formgebend hergestellt werden und gleichzeitig die Wahl des Oberflächenmaterials relativ frei wählbar ist, ohne dass dieses während der Verarbeitung eine Schädigung erfährt.

Weiterhin soll das Verfahren dazu geeignet sein, dass Schaumwerkstoffe mit oder ohne Deckmaterial partiell verdichtet werden können. Auch soll das Verfahren dazu geeignet sein, aus zwei oder mehreren Schaumwerkstoffen mit oder ohne Deckschichten Hohlkörper herzustellen. Weiterhin soll das Verfahren derart modifizierbar sein, dass man es mit einem Vakuumformprozess kombinieren kann.

Weiterhin sollen unabhängig von den einzelnen als Aufgaben gestellten Ausführungsformen mit dem neuartigen Verfahren schnelle Taktzeiten von deutlich unter 10 min realisierbar sein. Weitere, an dieser Stelle nicht explizit diskutierte Aufgaben, können sich im Weiteren aus dem Stand der Technik, der Beschreibung, den Ansprüchen oder Ausführungsbeispielen ergeben.

### Lösung

Gelöst werden die Aufgaben durch ein neuartiges Verfahren zur Formgebung von Schaumwerkstoffen. Dieses neuartige Verfahren ist vor allem zur Formgebung von Hartschaumwerkstoffen Polymethacrylimid (PMI) geeignet. Das Verfahren weist dabei folgende Prozessschritte auf:
a) Optionaler Compositelagenaufbau mit Deckmaterialien und dazwischen liegendem Schaumkern,
b) Erhitzen des Schaumwerkstoffs durch Bestrahlung mit naher InfrarotStrahlung (NIR-Strahlung) mit einer Wellenlänge zwischen 0,78 und 1,40 µm,
c) Formgebung mit einem Formgebungswerkzeug
d) Abkühlen und Entnahme des fertigen Werkstücks.

Hierzu sind zwei unterschiedliche Ausführungsformen möglich. In der ersten sind das Werkzeug zum Aufheizen mit der NIR-Strahlung und das Formgebungswerkzeug getrennt von einander. Dabei weist das Verfahren folgende Prozessschritte auf:
a) Optionaler Compositelagenaufbau mit Deckmaterialien und dazwischen liegendem Schaumkern,
b1) Einlegen in den maschinenseitigen Wirkbereich der Heizfelder,
b2) Erhitzen des Schaumwerkstoffs durch Bestrahlung mit naher Infrarot-Strahlung (NIR-Strahlung) mit einer Wellenlänge zwischen 0,78 und 1,40 µm,
c1) Überführen des Schaumwerkstoffs in ein Formgebungswerkzeug,
c2) Formgebung mit dem Werkzeug und
d) Abkühlen und Entnahme des fertigen Werkstücks.

In einer zweiten Ausführungsform ist die Aufheizvorrichtung zur Bestrahlung mit NIR-Strahlung integraler Bestandteil des Formgebungswerkzeugs:
a) Optionaler Compositelagenaufbau mit Deckmaterialien und dazwischen liegendem Schaumkern,
b1) Einlegen in ein Formwerkzeug welches mit einem entfernbaren Heizfeld ausgestattet ist,
b2) Erhitzen des Schaumwerkstoffs durch Bestrahlung mit naher Infrarot-Strahlung (NIR-Strahlung) mit einer Wellenlänge zwischen 0,78 und 1,40 µm,
c1) Entfernen der Heizung aus dem Verfahrbereich des Formgebungswerkzeuges,
c2) Formgebung mit dem Werkzeug und
d) Abkühlen und Entnahme des fertigen Werkstücks.

Die Verfahrensschritte b1) und b2) sind dabei als Teilschritte des Verfahrensschritts b) oberer Ausführung zu verstehen. Das gleiche gilt für die Verfahrensschritte c1) und c2) in Hinblick auf Verfahrensschritt c).

Überraschend wurde gefunden, dass durch das schonende Erhitzen des Materials in Prozessschritt b) (bzw. b2)) eine plastische Verformbarkeit durch einen gleichmäßigen Wärmeeintrag herbeigeführt werden kann, ohne dass es gleichzeitig zu einer Schädigung des Materials kommt. Insbesondere die z.B. beim Erhitzen in einem Ofen zu beobachtende Schädigung der Hartschaumoberfläche bleibt bei sachgerechter Durchführung des vorliegenden Verfahrens aus. Die Wärmestrahlung des verwendeten NIR-Spektralbereiches durchdringt die Gasphase der Schaumzellen absorptionsfrei und bewirkt ein direktes Erhitzen der Zellwandmatrix.

Insbesondere zeichnet sich das erfindungsgemäße Verfahren dadurch aus, dass die Formgebung in Prozessschritt c) mittels eines Twin-sheet-Verfahrens unter Vakuum bzw. unter Unterdruck erfolgt. Die Twin-sheet-Vorrichtung ist dabei derart gestaltet, dass diese als Pressformmaschine eingesetzt werden kann.

Das Twin-sheet-Verfahren zeichnet sich grundsätzlich dadurch aus, dass zwei oder mehr Werkstücke in einem Verfahrensschritt im Vakuum bzw. unter Unterdruck verformt und dabei ohne Zusätze wie Klebstoffe, Schweißhilfsstoffe oder Lösungsmittel miteinander verschweißt werden. Dieser Verfahrensschritt ist in hohen Taktzeiten, wirtschaftlich und umweltfreundlich durchzuführen. Im Rahmen der vorliegenden Erfindung wurde überraschend gefunden, dass dieses Verfahren durch den zusätzlichen Prozessschritt des Vorwärmens der Werkstücke durch Bestrahlung mit NIR-Strahlung mit einer Wellenlänge zwischen 0,78 und 1,40 µm in Prozessschritt b) auch zur Verarbeitung von den PMI Hartschaumwerkstoffen, die nach Stand der Technik dazu ungeeignet schienen, dienen kann. Durch das relativ schnell durchführbare Aufheizen mit der genannten Strahlung wird eine spannungsfreie, gleichmäßige Wärmeverteilung im gesamten Werkstück erzielt. Dabei kann die Intensität der Strahlung je nach verwendetem Schaumwerkstoff im genannten Bereich variiert werden. Bei zusätzlichem Einsatz von Deckmaterialien werden die Temperatur der Heizfelder und deren Intensität dermaßen modifiziert, dass auch bei unterschiedlichen Verarbeitungs- und Formungstemperaturen Schaumkern und Deckmaterialien gemeinsam umgeformt und verbunden werden. Solche Anpassungen sind für den Fachmann mit wenigen Versuchen leicht durchführbar.

Ein großer Vorteil des erfindungsgemäßen Verfahrens ist, dass es umweltschonend und in sehr hohen Taktzeiten durchgeführt werden kann unter gleichzeitiger Zusammenfassung mehrerer Arbeitsschritte in einem Prozess. Dabei ergeben sich aus diesem grundsätzlich neuartigen Verfahren eine Reihe Varianten, die jeweils zur Herstellung von komplett neuartigen Produkten genutzt werden können:

In einer ersten Variante wird bei Prozessschritt c), d.h. bei der Formgebung eine lokale Verdichtung des Schaumwerkstoffs erzielt. Eine solche lokale Verdichtung ermöglicht neuartige Produkte. So sind Formteile aus einem Hartschaumwerkstoff mit lokalen Verdichtungen vielseitiger anwendbar und als ganzes stabiler. Darüber hinaus können neue Formen realisiert werden. Auch ist ein Vorteil eines solchen Produktes, dass insbesondere in den verdichteten Bereichen zur harmonischen Einleitung von Kräften aus der Konstruktionsperipherie, Armierungen, Inserts oder Verschraubungen eingebracht werden können. Mittels solcher Inserts oder Verschraubungen können die Schaumwerkstoffe anschließend einfach im Fahrzeug- oder Flugzeugbau weiterverarbeitet werden. Auch lassen sich solche Bereiche oft besser verkleben oder verschweißen. Eine solche Variante des erfindungsgemäßen Verfahrens lässt sich beispielsweise für PMI-Schäume mit Taktzeiten von unter 5 min durchführen. Überraschend an dieser Variante ist insbesondere, dass ein solches Bauteil nach Stand der Technik nicht in einem einstufigen Prozess hergestellt werden konnte.

In einer zweiten Modifikation des erfindungsgemäßen Verfahrens handelt es sich bei Prozessschritt c) um ein Twin-sheet-Verfahren.

Besonders bevorzugt ist diese Variante des erfindungsgemäßen Verfahrens, wenn der Schaumwerkstoff in Prozessschritt a) mit einem Deckmaterial einseitig oder beidseitig belegt wird und somit mittels des Twin-sheet-Verfahrens ein Compositematerial mit einer einseitigen oder beidseitigen Deckschicht und einem Hartschaumkern hergestellt wird. Diese zweite Variante kann in Taktzeiten von unter 6 Minuten durchgeführt werden.

Überraschenderweise ist die Wahl des Deckmaterials relativ frei. Es kann sich dabei beispielsweise um reine Thermoplasten, um Gewebe oder Gestricke oder Verbunde daraus, wie z.B. so genannte Organobleche oder kunststoffbeschichtete textile Trägerbahnen wie z.B. Kunstleder handeln. Bevorzugt handelt es sich bei dem Deckmaterial um einen faserverstärkten Kunststoff. Bei den Fasern kann es sich wiederum beispielsweise um Aramid-, Glas-, Kohle-, Polymer- oder Textilfasern handeln. Bei dem Kunststoff wiederum kann es sich bevorzugt um PP, Polyethylen (PE), Polycarbonat (PC), Polyvinylchlorid (PVC), ein Epoxidharz, ein Isocyanatharz, ein Acrylatharz, einen Polyester oder um ein Polyamid handeln.

In einer dritten Variante des Verfahrens werden in Prozessschritt a) mindestens 2 getrennte Stücke des Schaumwerkstoffs vorgelegt und aus diesen anschließend bei der Formgebung in Prozessschritt c) ein Hohlkörper geformt. Diese Variante kann auch derart gestaltet werden, dass Formstücke mit mehr als einem Hohlraum hergestellt werden. Vorteil dieser Variante ist es, dass man solche Hohlkörper ohne Klebung oder anschließendes thermisches Verschweißen herstellen kann. Dies führt wiederum dazu, dass der resultierende Hohlkörper eine bessere Kombination aus Stabilität und Gewicht gegenüber Hohlkörpern des Standes der Technik aufweist. Darüber hinaus hat der Hohlkörper ein besseres optisches Erscheinungsbild. Dies kann soweit gehen, dass man die Fügestelle zwischen den beiden ursprünglichen Schaumwerkstücken am fertigen Produkt nicht oder kaum noch erkennen kann. Insbesondere lässt sich die bei dem Verfahren gebildete Schweißnaht nicht oder kaum von dem umgebenden Material unterscheiden und die Porenstruktur bleibt auch an dieser Fügestelle erhalten. Auch dieses Verfahren kann in Form eines Twin-sheet-Verfahrens erfolgen. Dabei können auch sehr komplexe Geometrien mit guter Reproduzierbarkeit in Taktzeiten von unter 5 min realisiert werden.

In einer im Vergleich zur dritten Variante leicht modifizierten Ausführungsform der Erfindung lässt sich auch ein einzelnes Werkstück eines Hartschaums mittels eines vakuumunterstützten Formgebungsverfahrens mit Unterdruck zu sehr komplexen Werkstücken geformt werden. Dieses Verfahren eignet sich besonders für Schaumdicken bis 10 mm. Bevorzugt wird dabei direkt vor der Überführung des Schaumwerkstoffs in das Formgebungswerkzeug in Prozessschritt c) oder alternativ direkt danach im Formgebungswerkzeug ein Vorformen mittels Pressluft durchgeführt.

Grundsätzlich können diese Verfahren in einer weiteren Modifikation in einem zweischaligen Werkzeug durchgeführt werden. Dies führt zu einer noch höheren Geometriegenauigkeit. Ein weiterer großer Vorteil der vorliegenden Erfindung ist, dass die drei oben diskutierten Varianten auch frei miteinander in einem simultan durchgeführten erfindungsgemäßen Verfahren miteinander kombiniert werden können. So können z.B. am Rand verdichtete Körper mit mindestens einem Hohlraum hergestellt werden. Auch Composites mit teilweise verdichtetem Schaumkern und/oder einem oder mehreren Hohlräumen können hergestellt werden.

In der Regel wird das Material, unabhängig von der beschriebenen Ausführungsform der Erfindung, in dem Gerät mittels eines Niederhalterrahmens fixiert, um ein Verrutschen zu vermeiden. Dazu steht das zu verarbeitende Material z.B. einige Zentimeter über den Werkzeugrand heraus und wird in diesem Bereich mittels des erwähnten Niederhalterrahmens heruntergedrückt.

Das Hartschaummaterial stellt dabei PMI dar. Solche PMI-Schäume werden normalerweise in einem zweistufigen Verfahren hergestellt: a) Herstellung eines Gusspolymerisats und b) Aufschäumen dieses Gusspolymerisats.

Zur Herstellung des Gusspolymerisats werden zunächst Monomergemische, welche (Meth)acrylsäure und (Meth)acrylnitril, vorzugsweise in einem Molverhältnis zwischen 2:3 und 3:2, als Hauptbestandteile enthalten, hergestellt. Zusätzlich können weitere Comonomere verwendet werden, wie z.B. Ester der Acryl- oder Methacrylsäure, Styrol, Maleinsäure oder Itaconsäure bzw. deren Anhydride oder Vinylpyrrolidon. Dabei sollte der Anteil der Comonomeren jedoch nicht mehr als 30 Gew% betragen. Geringe Mengen von vernetzenden Monomeren, wie z.B. Allylacrylat, können auch verwendet werden. Die Mengen sollten jedoch vorzugsweise höchstens 0,05 Gew% bis 2,0 Gew% betragen. Das Gemisch für die Copolymerisation enthält ferner Treibmittel, die sich bei Temperaturen von etwa 150 bis 250 °C entweder zersetzen oder verdampfen und dabei eine Gasphase bilden. Die Polymerisation erfolgt unterhalb dieser Temperatur, so dass das Gusspolymerisat ein latentes Treibmittel enthält. Die Polymerisation findet zweckmäßig in Blockform zwischen zwei Glasplatten statt.

In einem zweiten Schritt erfolgt dann bei entsprechender Temperatur das Aufschäumen des Gusspolymerisats. Die Herstellung solcher PMI-Schäume ist dem Fachmann grundsätzlich bekannt und kann beispielsweise in EP 1 444 293, EP 1 678 244 oder WO 2011/138060 nachgelesen werden. Als PMI-Schäume seien insbesondere ROHACELL^{®}-Typen der Firma Evonik Industries AG genannt. Bezüglich Herstellung und Verarbeitung sind zu den PMI-Schäumen Acrylimid-Schäume als Analoga anzusehen. Aus toxikologischen Gründen sind diese jedoch gegenüber anderen Schaummaterialien deutlich weniger bevorzugt.

Die benötigten Schaumteile können durch eine geeignete Wahl der Glasplatten oder durch eine Herstellung mittels eines In-mold-Foamings hergestellt werden. Alternativ erfolgt die Herstellung aus aufgeschäumten Schaumplatten durch Herausschneiden, Sägen oder Fräsen. Dabei können bevorzugt mehrere Schaumteile aus einer Platte geschnitten werden.

Die Dichte des Hartschaummaterials ist relativ frei wählbar. PMI Schäume können beispielsweise in einem Dichtebereich von 25 bis 220 kg/m³ eingesetzt werden.

Gesägte, geschnittene oder gefräste Schaumkernstücke haben dabei den Vorteil gegenüber mittels In-mold-Foaming hergestellten, dass diese an der Oberfläche offene Poren aufweisen. Beim Inkontaktbringen mit den harzgetränkten Fasern dringt ein Teil des noch nicht ausgehärteten Harzes in diese offenen Poren an der Schaumkernoberfläche ein. Dies hat den Vorteil, dass nach Aushärtung eine besonders starke Haftung an der Grenzfläche zwischen Schaumkern und Mantelmaterial erhalten wird.

Grundsätzlich sind die erfindungsgemäßen Werkstücke aus dem Hartschaumstoff sehr breit einsetzbar.

Werkstücke, die nach der ersten Variante der lokalen Verdichtung hergestellt wurden, können auch als Schaumwerkstoffe mit integralen Strukturen bezeichnet werden. Diese sind - auch in der zusätzlichen Variante als Composite-Material - insbesondere in Anwendungen geeignet, die die Anbindung krafteinleitender Schnittstellen mit peripheren Strukturen der das (Composite-)Bauteil umgebenden Materialien bedingen. Dies gilt für jedwede denkbare Konstruktion, bei welcher Strukturteile aus z.B. Metall oder anderen Kunststoffen mit dem Schaumwerkstoff bzw. dem Composite verbunden werden. Diese Voraussetzungen ergeben sich insbesondere aus den Anwendungsgebieten Automobilbau, Luft- und Raumfahrttechnik, Schiffsbau, Konstruktion von Schienenfahrzeugen, Maschinenbau, Medizintechnik, Möbelindustrie, beim Bau von Windkraftanlagen oder im Aufzugsbau.

Composite-Materialien der zweiten Variante, auch solche ohne integrale Strukturen, können insbesondere Anwendung in der Serienfertigung z.B. für Karosseriebau oder für Innenverkleidungen in der Automobilindustrie, Interiorteile im Schienenfahrzeugs- oder Schiffsbau, in der Luft- und Raumfahrtindustrie, im Maschinenbau, beim Möbelbau oder bei der Konstruktion von Windkraftanlagen finden.

Hohlkörper aus Hartschaumstoffen wiederum können z.B. Anwendung in Batteriekästen, Luftführungskanälen in Klimaanlagen oder als aerodynamische Baugruppe von Windrotorblättern (z.B. als so genannte Trailingedges) verwendet werden. Darüber hinaus sind aber auch Anwendungen in den oben genannten Industriezweigen denkbar.

### Beschriftung der Zeichnungen

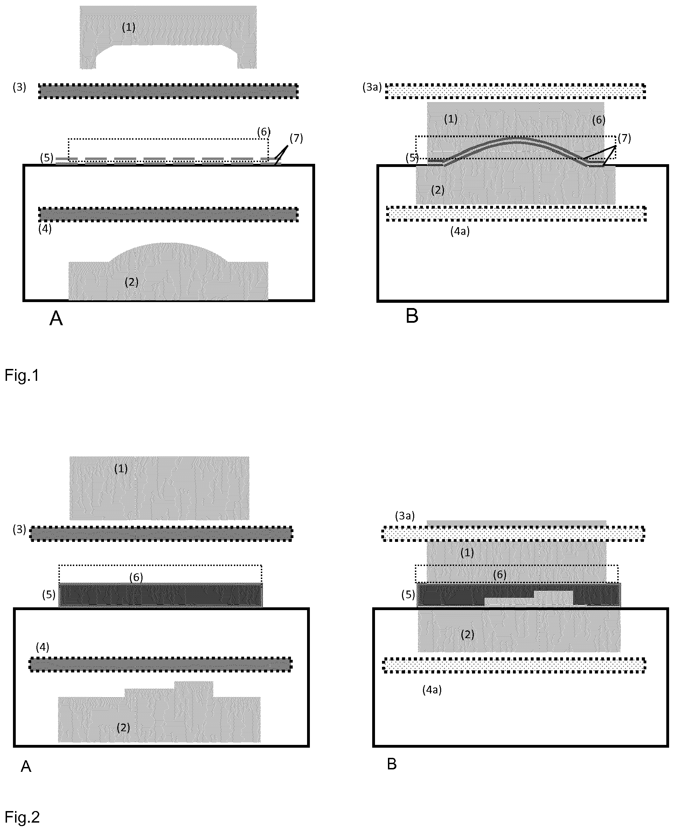

Fig. 1: Fertigung von faserverstärkten Kunststoffen mit Schaumstoffkern
   A: Aufheizphase; B: Formgebung
      (1) Oberteil des Formgebungswerkzeugs
      (2) Unterteil des Formgebungswerkzeugs
      (3) Oberheizung (NIR-Strahler)
      (4) Unterheizung (NIR-Strahler)
      (3a) und (4a) Zur Seite gefahrene Heizungen
      (5) Schaumkern
      (6) Niederhalterrahmen
      (7) Deckschichten
Fig. 2: Herstellung einer integralen Struktur mit teilweiser Verdichtung des Schaumstoffs
   A: Aufheizphase; B: Formgebung
      (1) Oberteil des Formgebungswerkzeugs
      (2) Unterteil des Formgebungswerkzeugs
      (3) Oberheizung (NIR-Strahler)
      (4) Unterheizung (NIR-Strahler)
      (3a) und (4a) Zur Seite gefahrene Heizungen
      (5) Schaumstoff
      (6) Niederhalterrahmen
Fig. 3: Formen von Hohlkörpern
   A: Aufheizphase; B: Formgebung
      (1) Oberteil des Formgebungswerkzeugs
      (2) Unterteil des Formgebungswerkzeugs
      (3) Oberheizung (NIR-Strahler)
      (4) Unterheizung (NIR-Strahler)
      (3a) und (4a) Zur Seite gefahrene Heizungen
      (5) Schaumstoff (hier: erstes Werkstück für Oberseite)
      (6) Niederhalterrahmen
      (8) Schaumstoff (zweites Werkstück für Unterseite)

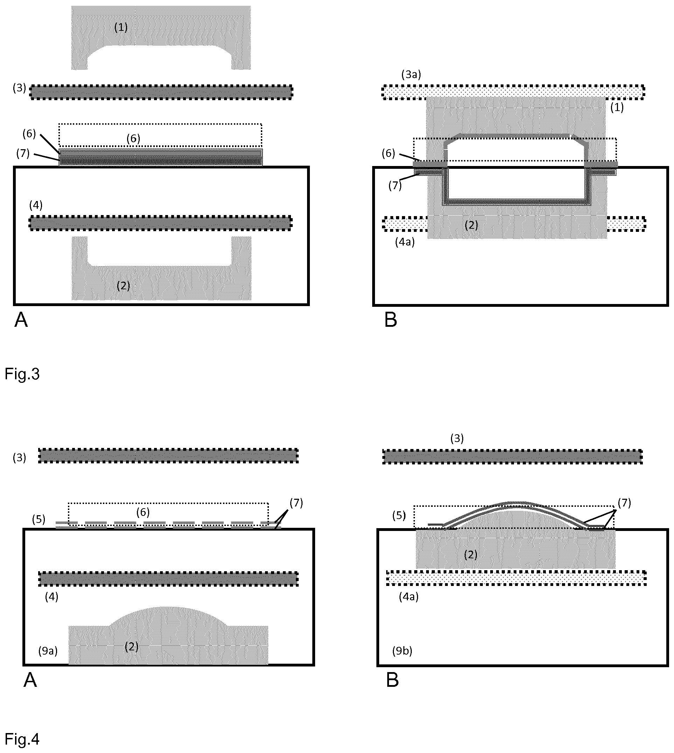

Fig. 4: Vakuumformen von Schaumstoffen
   A: Aufheizphase; B: Formgebung
      (2) Unterteil des Formgebungswerkzeugs
      (3) Oberheizung (NIR-Strahler)
      (4) Unterheizung (NIR-Strahler)
      (4a) Zur Seite gefahrene Unterheizung
      (5) Schaumstoff
      (6) Niederhalterrahmen
      (7) Deckschichten
      (9a) Maschinenraum unter Oberdruck
      (9b) Maschinenraum unter Unterdruck (Vakuum)

### Ausführungsbeispiele

Im Folgenden werden für einige besondere Ausführungsformen der Erfindung allgemeine Beschreibungen aufgezeigt. Dabei enthalten diese auch Beispiele. Entsprechende Versuche konnten erfolgreich durchgeführt werden.

### Beispiel 1: Fertigung von faserverstärkten Kunststoffen mit Schaumstoffkern (Compositebauteile)

Das Verfahren wird auf einer Twin-sheet Umformmaschine wie zum Beispiel Modell T8 von der Fa. Geiss AG, durchgeführt. Die Maschine war dabei in folgender Konfiguration ausgerüstet:
Heizfelder mit Flash-Strahlern (NIR; 0,78-1,40 µm)
Verstellbares Arbeitsraumfenster
Höhenverstellbare Oberheizung
Presskraft 30 to (min.), motorische Antriebe
Heiz- und kühlbares Umformwerkzeug
Zur Veranschaulichung dieser Ausführungsform sei auf Fig.1 verwiesen.

Im Allgemeinen richten sich die zu wählenden Verfahrensparameter nach der Auslegung der im Einzelfall eingesetzten Anlage. Sie müssen durch Vorversuche ermittelt werden. So richtet sich die Führungstemperatur T_{F} nach dem T_{g}(S) der PMI-Schaummatrix, nach der Umformtemperatur der Deckschichten, nach der Höheneinstellung der Oberheizung T_{g}(S) T_{F} (Temperatur der Oberheizung). Dabei gilt, dass die Temperatur der Oberheizung höher einzustellen ist, umso größer der Abstand zur Schaummatrix ist. Je nach Umformgrad (U_{g}) der partiellen Bauteilbereiche kann auch die Strahlerfeldintensität (I) variiert werden. In Randnähe zum Niederhalter wird die Strahlerfeldintensität I nahe 100% gewählt, um ein Nachfließen des Materials zu gewährleisten und gleichzeitig die Einspannung des Materials zu erhalten.

Auflage der Deckschichten (Layups): Der Schaumkern kann einseitig oder beidseitig mit unterschiedlichen Deckmaterialien versehen werden. Es können z.B. drapierfähige Gewebe / Gelege, aus unterschiedlichsten Faserarten oder Fasermischungen gefertigte Materialverbunde eingesetzt werden (so genannte Organobleche), welche mit thermoplastischen Phasen ausgerüstet sind oder thermoplastische Deckschichten wie PC, PMMA, PVC oder andere thermoplastisch formbare Kunststoffe, welche sich mit der Schaumoberfläche verbinden lassen. Dies kann optional unter Einsatz eines Schmelzkleberfilmes oder -vlieses als Haftvermittler erfolgen. In konkretem Beispiel wurden oben und unten eine 800 µm dicke Schicht aus Organoblech der Firma Bond Laminates (Tepex ® Dynalite 102-RG600) eingesetzt. In einem weiteren Beispiel wurde Polycarbonatfolie Lexan in der Dicke 1500 µm beidseitig verwendet.

Durchführung: Als Schaumkern wurde ein PMI-Schaum des Typs ROHACELL^{®} S der Firma Evonik Industries AG mit einer Dichte von 51 kg/m³ und eine Materialdicke von 15 mm eingesetzt. Der Niederhalter sollte bevorzugt auf der Innenseite mit Al-Klebeband oder Hochglanz-Edelstahlblechen verspiegelt sein. Die Formatgröße der Deckschichten richtet sich nach der eingestellten Fensterdimension und ist dermaßen bemessen, dass die Deckschichten in Breite und Länge das Fenster um ca. 5 cm überlappen und somit vom Niederhalterrahmen erfasst werden können. Der umzuformende Schaumkern mit den Deckschichten wird über dem Arbeitsfenster positioniert und der Niederhalterrahmen wird zur Fixierung abgesenkt.

Während des Aufheizens auf die Umformtemperatur des PMI-Schaumes von 210 °C, kann die beginnende Wellung der Deckschichten beobachtet werden. Mit Beginn der fortschreitenden Plastifizierung werden einzelne Druckluftimpulse im Maschinenraum gesetzt, um ein Durchhängen auf die Unterheizung zu vermeiden. In Abhängigkeit von den Erfordernissen der Deckschichten kann nach ca. 3 bis 4 min die Führungstemperatur und Intensität der Heizstrahler derart geändert werden, dass sich die Deckmaterialien drapierfähig plastisch verformen. Nun wird kurzzeitig die Führungstemperatur um ungefähr weitere 5 °C erhöht, um dem Material eine größere Restwärme zu verleihen.

Nach Beendigung der Aufheizphase werden das untere sowie das obere Heizfeld aus dem Verfahrbereich der Werkzeughälften herausgefahren und die Schließbewegung des temperierten Werkzeuges mit einer Temperatur zwischen 120 °C und 150 °C schnellstmöglich durchgeführt. Die Formgebung und das Drapieren der Deckschichten entlang der Werkzeuggeometrie erfolgen auf diese Weise in einem Arbeitsschritt. Nach dem Abkühlen des Werkzeuges auf unter 80 °C kann das Bauteil schließlich entnommen werden. Nach einem Wiederaufheizen des Werkzeuges kann mit der Fertigung des nächsten Composite-Bauteiles begonnen werden.

### Beispiel 2: Fertigung von Schaumwerkstoffen mit lokaler Verdichtung (integralen Strukturen)

Das Verfahren wird beispielsweise auf der gleichen wie in Beispiel 1 beschriebenen Twin-sheet Umformmaschine Modell T8 von der Fa. Geiss AG, durchgeführt. Auch hier richten sich im Allgemeinen die zu wählenden Verfahrensparameter nach der Auslegung der im Einzelfall eingesetzten Anlage. Entsprechendes gilt für die Führungstemperatur T_{F} wie zu Beispiel 1 beschrieben. Zur Veranschaulichung dieser Ausführungsform sei auf Fig.2 verwiesen.

Durchführung: Im vorliegenden Beispiel wurde PMI-Schaum des Typs ROHACELL^{®} IG der Firma Evonik Industries AG mit einer Dichte von 110 kg/m³ verwendet. Die Ausgangsmaterialstärke betrug 60 mm. Die partielle Verdichtung wurde durch im Werkzeug erhaben ausgeführten Konen erreicht, welche das Material im Durchmesser ca. 25 mm partiell auf 34 mm Dicke verdichteten. Auch in anderen Bauteilbereichen wurde die werkzeugseitige Geometrie mit engen Radien und beträchtlichen Verdichtungsgraden in einer Taktzeit von ca. 6 min abgebildet.

Der Niederhalter sollte dazu bevorzugt auf der Innenseite mit Al-Klebeband oder Hochglanz-edelstahlblechen verspiegelt sein. Die Formatgröße des Schaumes richtet sich nach der eingestellten Fensterdimension und ist dermaßen bemessen, dass das Schaumformat in Breite und Länge das Fenster um ca. 5 cm überlappt und somit vom Niederhalterrahmen erfasst werden kann. Das zu formende Schaumformat wird über dem Arbeitsfenster positioniert und der Niederhalterrahmen wird zur Fixierung abgesenkt.

Entsprechend des Grades der partiellen Verdichtung, z.B. in Bereichen, in welchen Formteile wie z.B. Inserts eingebracht werden sollen, kann die Heizintensität angepasst werden. In diesem konkreten Beispiel erfolgte zunächst ein Aufheizen mit den Flash-Strahlern (NIR; 0,78-1,40 µm) auf eine Temperatur von 190 °C. Mit Beginn fortschreitender Plastifizierung werden bei Schaumdicken ≤ 15 mm einzelne Druckluftimpulse im Maschinenraum gesetzt, um ein Durchhängen auf die Unterheizung zu vermeiden. Nach der Aufheizphase wird kurzzeitig die Führungstemperatur um weitere ca. 5 -10 °C angehoben, um dem Material eine größere Restwärme zu verleihen.

Zur Formgebung werden nach Beendigung der Aufheizphase das untere sowie das obere Heizfeld aus dem Verfahrbereich der Werkzeughälften herausgefahren und die Schließbewegung des temperierten Werkzeuges mit einer Temperatur zwischen 120 °C und 150 °C schnellstmöglich eingeleitet. Die Formgebung und die gleichzeitige Verdichtung einzelner Bauteilbereiche erfolgen auf diese Weise in einem Arbeitsschritt. Dabei kann im gleichen Arbeitsschritt simultan das Einbringen von Inserts erfolgen.

Nach dem Abkühlen des Werkzeuges auf eine Temperatur von unter 80 °C kann das Bauteil entnommen werden. Nach einem Wiederaufheizen des Werkzeuges kann mit der Fertigung des nächsten FKV-Bauteiles begonnen werden.

### Beispiel 3: Formen von Hohlkörpern

Das Verfahren wird beispielsweise auf der gleichen wie in Beispiel 1 beschriebenen Twin-sheet Umformmaschine Modell T8 von der Fa. Geiss AG, durchgeführt. Auch hier richten sich im Allgemeinen die zu wählenden Verfahrensparameter nach der Auslegung der im Einzelfall eingesetzten Anlage. Entsprechendes gilt für die Führungstemperatur T_{F} wie zu Beispiel 1 beschrieben. Zur Veranschaulichung dieser Ausführungsform sei auf Fig.3 verwiesen.

Durchführung: Im vorliegenden Beispiel wurde PMI-Schaum des Typs ROHACELL^{®} IG der Firma Evonik Industries AG mit einer Dichte von 110 kg/m³ verwendet. Die Ausgangsmaterialstärke der beiden Schaumformate betrug jeweils 15 mm.

Der Niederhalter sollte dazu bevorzugt auf der Innenseite mit Al-Klebeband oder Hochglanz-Edelstahlblechen verspiegelt sein. Die Formatgröße des Schaumes richtet sich nach der eingestellten Fensterdimension und ist dermaßen bemessen, dass das Schaumformat in Breite und Länge das Fenster um ca. 5 cm überlappt und somit vom Niederhalterrahmen erfasst werden kann. Es werden zwei Schaumformate in den Twin-sheet-Rahmen der Maschine eingelegt. Die zu einem Hohlkörper zu verbindenden Schaumformate werden über dem Arbeitsfenster positioniert und der Niederhalterrahmen wird zur Fixierung abgesenkt.

Entsprechend des Formungsgrades kann die Heizintensität angepasst werden. In diesem konkreten Beispiel erfolgte zunächst ein Aufheizen mit den Flash-Strahlern (NIR; 0,78-1,40 µm) auf eine Temperatur von 195 °C. Mit Beginn fortschreitender Plastifizierung werden bei Schaumdicken ≤ 15 mm einzelne Druckluftimpulse im Maschinenraum gesetzt, um ein Durchhängen auf die Unterheizung zu vermeiden. Nach der Aufheizphase wird kurzzeitig die Führungstemperatur um weitere ca. 5 -10 °C angehoben, um dem Material eine größere Restwärme zu verleihen.

Zur Formgebung werden nach Beendigung der Aufheizphase das untere sowie das obere Heizfeld aus dem Verfahrbereich der Werkzeughälften herausgefahren und die Schließbewegung des temperierten Werkzeuges mit einer Temperatur zwischen 120 °C und 150 °C schnellstmöglich eingeleitet. Die Formgebung erfolgt durch Ansaugen der plastischen Schaumtafeln an die Werkzeuginnnenwandung des Ober- und Unterwerkzeuges. Gleichzeitig ist durch konstruktive Maßnahmen an der Werkzeuggeometrie gewährleistet, dass umlaufend eine Verschweißung der Schaumformate erfolgt. Der Hohlkörper bildete dabei die Werkzeuggeometrie konturkonform ab und war an den umlaufenden Rändern in einer Weise verschweißt, dass keine Bindenaht entsteht, sondern eine homogene Schaumstruktur sich ausbildet.

Nach dem Abkühlen des Werkzeuges auf eine Temperatur von unter 80 °C kann das Bauteil entnommen werden. Nach einem Wiederaufheizen des Werkzeuges kann mit der Fertigung des nächsten FKV-Bauteiles begonnen werden.

### Beispiel 4: Vakuumformen von Hohlkörpern

Das Verfahren wird beispielsweise auf der gleichen wie in Beispiel 1 beschriebenen Twin-sheet Umformmaschine Modell T8 von der Fa. Geiss AG, durchgeführt. Auch hier richten sich im Allgemeinen die zu wählenden Verfahrensparameter nach der Auslegung der im Einzelfall eingesetzten Anlage. Entsprechendes gilt für die Führungstemperatur T_{F} wie zu Beispiel 1 beschrieben. Zur Veranschaulichung dieser Ausführungsform sei auf Fig.4 verwiesen.

Durchführung: Im vorliegenden Beispiel wurde PMI-Schaum des Typs ROHACELL^{®}HF der Firma Evonik Industries AG mit einer Dichte von 71 kg/m³ verwendet. Die Ausgangsmaterialstärke des Schaumformats betrug 5,6 mm. Vorzugsweise werden bei dieser Ausführungsform der Erfindung bis zu 10 mm dicke Schaumformate verwendet.

Der Niederhalter sollte dazu bevorzugt auf der Innenseite mit Al-Klebeband oder Hochglanz-Edelstahlblechen verspiegelt sein. Die Formatgröße des Schaumes richtet sich nach der eingestellten Fensterdimension und ist dermaßen bemessen, dass das Schaumformat in Breite und Länge das Fenster um ca. 5 cm überlappt und somit vom Niederhalterrahmen erfasst werden kann. Es werden zwei Schaumformate in den Twin-sheet-Rahmen der Maschine eingelegt. Die zu einem Hohlkörper zu verbindenden Schaumformate werden über dem Arbeitsfenster positioniert und der Niederhalterrahmen wird zur Fixierung abgesenkt.

Entsprechend des Formungsgrades kann die Heizintensität angepasst werden. In diesem konkreten Beispiel erfolgte zunächst ein Aufheizen mit den Flash-Strahlern (NIR; 0,78-1,40 µm) auf eine Temperatur von 210 °C. Mit Beginn fortschreitender Plastifizierung werden einzelne Druckluftimpulse im Maschinenraum gesetzt und somit eine Schaumblase erzeugt.

Zur Formgebung wird nach Beendigung der Aufheizphase nur das untere Heizfeld aus dem Verfahrbereich der Werkzeughälften herausgefahren und das Formgebungswerkzeug von unten unter die Schaumblase gefahren. Dann wird das Werkzeug unter der Blase positioniert. Der Maschinenraum wird nun schnellstmöglich evakuiert. So wird durch die auflastende Luftsäule der Schaum über die Werkzeugkontur gezogen. Während des gesamten Formungsverlaufes verbleibt die Oberheizung in ihrer Arbeitsposition, um ein Abkühlen des Schaumes zu vermeiden. Nach dem Abkühlen des Werkzeuges auf ≤ 80 °C kann das Bauteil entnommen werden und nach wiederholtem Aufheizen des Werkzeuges kann mit der Fertigung des nächsten Bauteiles begonnen werden.

Die so erzeugte Geometrie mit einer Stichhöhe von ca. 260 mm stellt beispielsweise das Bugsegment eines Helikopterradoms dar.

## Patentansprüche

1. Verfahren zur Formgebung von Schaumwerkstoffen, **dadurch gekennzeichnet, dass** es sich bei dem Schaumwerkstoff um PMI handelt, und dass das Verfahren folgende Prozessschritte aufweist:
a) Optionaler Compositelagenaufbau mit Deckmaterialien und dazwischen liegendem Schaumkern,
b) Erhitzen des Schaumwerkstoffs durch Bestrahlung mit naher Infrarot-Strahlung (NIR-Strahlung) mit einer Wellenlänge zwischen 0,78 und 1,40 µm,
c) Formgebung mit einem Formgebungswerkzeug
d) Abkühlen und Entnahme des fertigen Werkstücks.

2. Verfahren gemäß Anspruch 1, **dadurch gekennzeichnet, dass** das Aufheizen und die Formgebung in zwei getrennten Werkzeugen erfolgt und das Verfahren dabei folgende Prozessschritte aufweist:
a) Optionaler Compositelagenaufbau mit Deckmaterialien und dazwischen liegendem Schaumkern,
b1) Einlegen in den maschinenseitigen Wirkbereich der Heizfelder,
b2) Erhitzen des Schaumwerkstoffs durch Bestrahlung mit naher Infrarot-Strahlung (NIR-Strahlung) mit einer Wellenlänge zwischen 0,78 und 1,40 µm,
c1) Überführen des Schaumwerkstoffs in ein Formgebungswerkzeug,
c2) Formgebung mit dem Werkzeug und
d) Abkühlen und Entnahme des fertigen Werkstücks.

3. Verfahren gemäß Anspruch 1, **dadurch gekennzeichnet, dass** das Aufheizen und die Formgebung in einem Werkzeug erfolgt und das Verfahren dabei folgende Prozessschritte aufweist:
a) Optionaler Compositelagenaufbau mit Deckmaterialien und dazwischen liegendem Schaumkern,
b1) Einlegen in ein Formwerkzeug welches mit einem entfernbaren Heizfeld ausgestattet ist,
b2) Erhitzen des Schaumwerkstoffs durch Bestrahlung mit naher Infrarot-Strahlung (NIR-Strahlung) mit einer Wellenlänge zwischen 0,78 und 1,40 µm,
c1) Entfernen der Heizung aus dem Verfahrbereich des Formgebungswerkzeuges,
c2) Formgebung mit dem Werkzeug und
d) Abkühlen und Entnahme des fertigen Werkstücks.

4. Verfahren gemäß einem der Ansprüche 1 bis 3, **dadurch gekennzeichnet, dass** es sich bei Prozessschritt c2) um ein Formgebungsverfahren unter Vakuum handelt.

5. Verfahren gemäß einem der Ansprüche 1 bis 4, **dadurch gekennzeichnet, dass** mit Prozessschritt c2) eine lokale Verdichtung des Schaumwerkstoffs erzielt wird.

6. Verfahren gemäß einem der Ansprüche 1 bis 4, **dadurch gekennzeichnet, dass** mindestens zwei getrennte Stücke des Schaumwerkstoffs vorgelegt werden, und dass aus diesen in Prozessschritt c2) ein Hohlkörper geformt wird.

7. Verfahren gemäß Anspruch 4, **dadurch gekennzeichnet, dass** direkt vor oder direkt nach Prozessschritt c) ein Vorformen mittels Pressluft erfolgt.

8. Verfahren gemäß einem der Ansprüche 4 oder 7, **dadurch gekennzeichnet, dass** Prozessschritt a) durchgeführt wird, und dass als Deckmaterial ein faserverstärkter Kunststoff verwendet wird.

9. Verfahren gemäß Anspruch 8, **dadurch gekennzeichnet, dass** es sich bei dem Kunststoff um PP, PE, PC, PVC, ein Epoxidharz, ein Isocyanatharz, ein Acrylatharz, einen Polyester oder um ein Polyamid handelt, und dass es sich bei dem Fasermaterial um Kohle-, Glas-, Polymer- oder Aramidfasern handelt.

## Claims

1. Process for forming foamed materials, **characterized in that** the foamed material comprises PMI, and **in that** said process comprises the steps of:
a) optional composite ply construction with outer materials and a foam core thereinbetween,
b) heating the foamed material by irradiation with near infrared radiation (NIR radiation) having a wavelength between 0.78 and 1.40 µm,
c) forming with a forming tool,
d) cooling and demolding the final workpiece.

2. Process according to Claim 1, **characterized in that** the heating and forming takes place in two separate tools and the process comprises the steps of:
a) optional composite ply construction with outer materials and a foam core thereinbetween,
b1) introduction into the machine-side active region of the heating fields,
b2) heating the foamed material by irradiation with near infrared radiation (NIR radiation) having a wavelength between 0.78 and 1.40 µm,
c1) transferring the foamed material into a forming tool,
c2) forming with the tool, and
d) cooling and demolding the final workpiece.

3. Process according to Claim 1, **characterized in that** the heating and forming takes place in one tool and the process comprises the steps of:
a) optional composite ply construction with outer materials and a foam core thereinbetween,
b1) introduction into a forming tool equipped with a removable heating field,
b2) heating the foamed material by irradiation with near infrared radiation (NIR radiation) having a wavelength between 0.78 and 1.40 µm,
c1) removing the heating means out of the operating range of the forming tool,
c2) forming with the tool, and
d) cooling and demolding the final workpiece.

4. Process according to any of Claims 1 to 3, **characterized in that** step c2) comprises a vacuum-forming process.

5. Process according to any of Claims 1 to 4, **characterized in that** step c2) provides a local consolidation of the foamed material.

6. Process according to any of Claims 1 to 4, **characterized in that** two or more separate pieces of the foamed material are initially charged, and **in that** a hollow article is molded from these in step c2).

7. Process according to Claim 4, **characterized in that** step c) is directly preceded or directly followed by preforming with compressed air.

8. Process according to either Claim 4 or 7, **characterized in that** step a) is carried out, and **in that** a fiber-reinforced plastic is used as outer material.

9. Process according to Claim 8, **characterized in that** the plastic comprises PP, PE, PC, PVC, an epoxy resin, an isocyanate resin, an acrylate resin, a polyester or a polyamide, and **in that** the fiber material comprises carbon, glass, polymeric or aramid fibers.

## Revendications

1. Procédé pour le façonnage de matériaux en mousse, **caractérisé en ce qu'**il s'agit, pour le matériau en mousse, de PMI et **en ce que** le procédé présente les étapes de procédé suivantes :
a) éventuellement formation de couches de composite avec des matériaux de recouvrement et un noyau en mousse se trouvant entre ceux-ci,
b) chauffage du matériau en mousse par irradiation par un rayonnement proche infrarouge (rayonnement NIR) présentant une longueur d'onde entre 0,78 et 1,40 µm,
c) façonnage à l'aide d'un outil de façonnage
d) refroidissement et prélèvement de la pièce finie.

2. Procédé selon la revendication 1, **caractérisé en ce que** le chauffage et le façonnage ont lieu dans deux outils séparés et le procédé présente les étapes de procédé suivantes :
a) éventuellement formation de couches de composite avec des matériaux de recouvrement et un noyau en mousse se trouvant entre ceux-ci,
b1) placement dans la zone active côté machine du champ chauffant,
b2) chauffage du matériau en mousse par irradiation par un rayonnement proche infrarouge (rayonnement NIR) présentant une longueur d'onde entre 0,78 et 1,40 µm,
c1) transfert du matériau en mousse dans un outil de façonnage,
c2) façonnage à l'aide de l'outil et
d) refroidissement et prélèvement de la pièce finie.

3. Procédé selon la revendication 1, **caractérisé en ce que** le chauffage et le façonnage ont lieu dans un outil et le procédé présente les étapes de procédé suivantes :
a) éventuellement formation de couches de composite avec des matériaux de recouvrement et un noyau en mousse se trouvant entre ceux-ci,
b1) placement dans un outil de moulage qui est équipé d'un champ chauffant amovible,
b2) chauffage du matériau en mousse par irradiation par un rayonnement proche infrarouge (rayonnement NIR) présentant une longueur d'onde entre 0,78 et 1,40 µm,
c1) éloignement du chauffage de la zone de procédé de l'outil de façonnage,
c2) façonnage à l'aide de l'outil et
d) refroidissement et prélèvement de la pièce finie.

4. Procédé selon l'une quelconque des revendications 1 à 3, **caractérisé en ce qu'**il s'agit, pour l'étape de procédé c2), d'un procédé de façonnage sous vide.

5. Procédé selon l'une quelconque des revendications 1 à 4, **caractérisé en ce que** l'étape de procédé c2) permet d'obtenir un compactage local du matériau en mousse.

6. Procédé selon l'une quelconque des revendications 1 à 4, **caractérisé en ce qu'**on dispose au préalable au moins deux morceaux séparés du matériau en mousse et qu'un corps creux est formé à partir de ceux-ci dans l'étape de procédé c2).

7. Procédé selon la revendication 4, **caractérisé en ce qu'**un préfaçonnage à l'aide d'air comprimé est réalisé directement avant ou directement après l'étape de procédé c).

8. Procédé selon l'une quelconque des revendications 4 ou 7, **caractérisé en ce que** l'étape de procédé a) est réalisée et **en ce qu'**on utilise, comme matériau de recouvrement, un matériau synthétique renforcé par des fibres.

9. Procédé selon la revendication 8, **caractérisé en ce qu'**il s'agit, pour le matériau synthétique, de PP, de PE, de PC, de PVC, d'une résine époxyde, d'une résine isocyanate, d'une résine acrylate, d'un polyester ou d'un polyamide et **en ce qu'**il s'agit, pour le matériau fibreux, de fibres de carbone, de verre, de polymère ou d'aramide.
